# EUROPÄISCHE PATENTANMELDUNG

(11) **EP 1 939 807 A1**
(43) Veröffentlichungstag der Anmeldung: **02.07.2008**
(21) Anmeldenummer: 06026959.4
(22) Anmeldetag: 27.12.2006
(51) Int. Cl.: G06T 3/40

(54) **Verfahren zur Bearbeitung einer Grafik**

(71) Anmelder: SIEMENS AKTIENGESELLSCHAFT, 80333 München (DE)
(72) Erfinder: Rosskopf, Harald, 76327 Pfinztal-Wöschbach (DE)

(57) **Zusammenfassung**

Die Erfindung betrifft ein Verfahren zur Bearbeitung einer auf einer Anzeigeeinheit in einer Originaldarstellung darstellbaren Grafik, insbesondere zur Bearbeitung eines Rezeptes eines Chargenprozesses. Gewöhnlich sind entweder Teile bzw. Objekte einer Grafik nur schwer erkennbar, falls die vollständige Grafik auf der Anzeigeeinheit dargestellt wird, oder Teile bzw. Objekte des Rezeptes fehlen, falls ein Ausschnitt des Rezeptes in einer vergrößerten Darstellung angezeigt wird. Es werden Maßnahmen vorgeschlagen, wodurch diese Nachteile vermieden werden.

## Beschreibung

Die Erfindung betrifft ein Verfahren zur Bearbeitung einer auf einer Anzeigeeinheit in einer Originaldarstellung darstellbaren Grafik, insbesondere zur Bearbeitung eines Rezeptes eines Chargenprozesses. Darüber hinaus betrifft die Erfindung ein Programmiergerät mit einem Software-Werkzeug zur Bearbeitung einer auf einer Anzeigeeinheit darstellbaren Grafik.

Ein derartiges Verfahren sowie ein derartiges Programmiergerät ist aus dem Siemens-Katalog ST PCS 7, Ausgabe März 2006, Kapitel 6 bekannt. Mittels eines Rezepteditors erstellt ein Anwender im Rahmen einer Chargenprozessautomatisierung ein Rezept, welches über eine grafische Bedienoberfläche aufgrund verschiedener Bearbeitungsfunktionen modifizierbar ist. Nachteilig ist, dass entweder Teile bzw. Objekte des Rezeptes nur schwer erkennbar sind, falls das vollständige Rezept auf der Anzeigeeinheit dargestellt wird, oder Teile bzw. Objekte des Rezeptes fehlen, falls ein Ausschnitt des Rezeptes in einer vergrößerten Darstellung angezeigt wird.

Der vorliegenden Erfindung liegt die Aufgabe zugrunde, ein Verfahren der eingangs genannten Art anzugeben, welches eine verbesserte Bearbeitung der Grafikdarstellung ermöglicht und welches die genannten Nachteile vermeidet. Ferner ist ein geeignetes Programmiergerät zur verbesserten Bearbeitung einer Grafikdarstellung zu schaffen.

Diese Aufgabe wird im Hinblick auf das Verfahren mit den im kennzeichnenden Teil des Anspruchs 1 angegebenen, im Hinblick auf das Programmiergerät mit den im kennzeichnenden Teil des Anspruchs 7 angegebenen Maßnahmen gelöst.

Die Erfindung geht von der Idee aus, einen durch einen Anwender auf der Bedieneroberfläche ausgewählten Bereich bzw. ein ausgewähltes Objekt stark zu vergrößern, dafür einen z. B. an diesen ausgewählten Bereich direkt angrenzenden Stauchbereich stark zu verkleinern. Mit anderen Worten: Die Grafik wird nicht in gleichmäßiger Größe und Auflösung gezeigt, interessante Teile werden größer, andere dafür kleiner gezeigt. Es werden keine "Scrollbars" benötigt, um die Ansicht auf den interessanten Teil zu verschieben und einen Ausschnitt sichtbar zu machen. Ferner wird auf ein "Zooming" verzichtet, durch welches ein Ausschnitt vergrößert darstellbar ist. Darüber hinaus kann auch eine "Lupenfunktion" entfallen, welche einen Bereich vergrößert anzeigt, wobei durch die Lupenfunktion ein vergrößert dargestellter Bereich andere Bereiche überdeckt, wodurch diese überdeckten Bereiche für einen Betrachter nicht mehr sichtbar sind.

In einer Ausgestaltung der Erfindung ist vorgesehen, einen dritten bzw. den restlichen Bereich in der ursprünglichen bzw. in der Originaldarstellung zu belassen. Dadurch wird ermöglicht, dass die Grafik komplett auf der Anzeigeeinheit sichtbar bleibt.

In einer weiteren Ausgestaltung der Erfindung gemäß den im Anspruch 3 angegebenen Maßnahmen umgibt der im Vergleich zur Originaldarstellung verkleinerte Bereich (Stauchzone) den selektierten, im Vergleich zur Originaldarstellung vergrößerten Bereich, wobei die Stauchzone von dem in der Originaldarstellung gezeigten Bereich umgeben wird.
Im Unterschied dazu ist gemäß den im Anspruch 4 angegebenen Maßnahmen vorgesehen, dass der in der Originaldarstellung gezeigte Bereich den ausgewählten, vergrößerten Bereich umgibt und die Stauchzone den in der Originaldarstellung gezeigten Bereich. In beiden Fällen ändern sich die Zonenränder, falls der Anwender die Größe des selektierten Bereiches ändert. Der Anwender kann die Proportionen der Bereiche bzw. der Zonen dynamisch einstellen bzw. anpassen, wobei eine vollständige Anzeige der Grafik bzw. des Rezeptes möglich ist.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: Bereiche einer auf einer Anzeigeeinheit dargestellten Grafik und
- Figur 2: ein auf einer Anzeigeeinheit dargestelltes Rezept zur Steuerung eines Chargenprozesses.

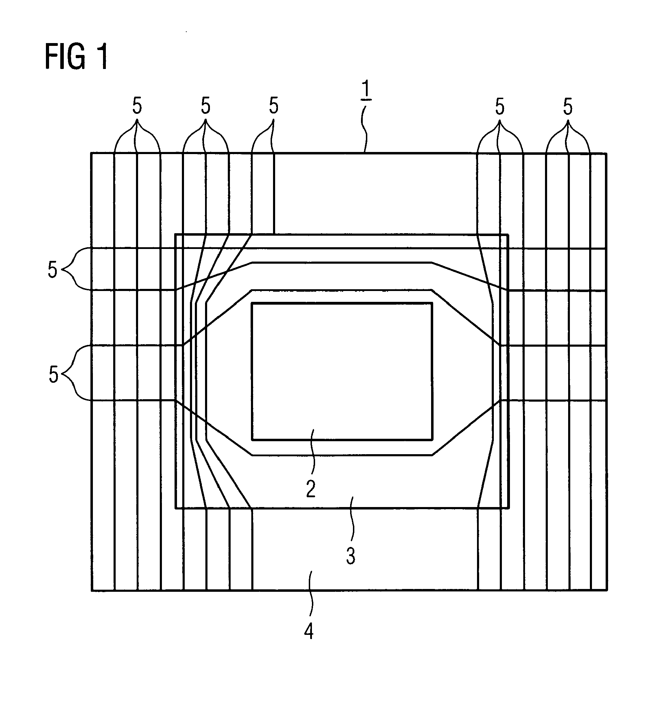

In Figur 1 ist mit 1 eine auf einer Anzeigeeinheit eines Programmiergerätes dargestellte Grafik bezeichnet, die ein Anwender mit Mitteln eines Programmiergerätes bearbeiten kann. Dazu ist das Programmiergerät mit einem auf diesem Programmiergerät ablauffähigen Software-Werkzeug und einem Bediengerät, z. B. ein Bediengerät in Form einer so genannten Maus, versehen. Der Anwender kann beispielsweise die Grafik derart bearbeiten, dass diese nicht wie gewöhnlich in einer Originaldarstellung mit gleichmäßiger Größe und Bildauflösung (in der ursprünglich dargestellten Größe und Auflösung) angezeigt wird, sondern in der Art, dass Bereiche in unterschiedlicher Größe und Auflösung dargestellt werden. Dazu wählt der Anwender einen Bereich aus, welcher im Vergleich zur Originaldarstellung vergrößert gezeigt werden soll. Dies kann dadurch bewirkt werden, dass der Anwender mittels einer Maus den vergrößert darzustellenden Bereich markiert, indem er z. B. die Grenzen dieses Bereiches mittels eines auf der Anzeigeeinheit darstellbaren und mit der Maus verschiebbaren Cursors einzeichnet oder den Cursor zunächst auf ein grafisches Objekt positioniert und schließlich durch einen Mausklick dieses Objekt markiert. Im vorliegenden Ausführungsbeispiel ist ein Bereich 2 ausgewählt, wodurch dieser vergrößert dargestellt wird, wobei durch das Software-Werkzeug automatisch ein den Bereich 2 umgebender Bereich 3 (Stauchzone) stark verkleinert wird und ein diesen Bereich 3 umgebender Bereich 4 unverändert in der Originaldarstellung gezeigt wird. Im dargestellten Beispiel sind die verschiedenen Bereichsgrößen durch unterschiedliche Gitterabstände 5 veranschaulicht. Es kann selbstverständlich auf die Anzeige des Bereiches 4 verzichtet werden, wodurch mehr Platz für die Darstellung der Bereiche 2 und 3 geschaffen wird, allerdings wird in diesem Fall auf die Anzeige der vollständigen Grafik verzichtet. Die Größe des Bereiches 3 bzw. der Stauchzone ist durch den Anwender einstellbar. Dies kann z. B. menügesteuert erfolgen, indem das Software-Werkzeug dem Anwender ein Setup-Menü bereitstellt, in welches der Anwender die X- und Y-Koordinaten des Stauchbereiches 3 eintragen kann. Vorzugsweise stellt der Anwender die Größe der Stauchzone mit der Maus ein, indem der Anwender den Cursor auf die Grenzen der Stauchzone 3 positioniert und durch eine entsprechende Mausbedienung die Grenzen verschiebt. Selbstverständlich kann das Software-Werkzeug in der Art und Weise ausgebildet werden, dass dieses dem Anwender ein Setup-Menü bereitstellt, in welchem der Anwender die Größe des Original- und des Stauchbereiches 3, 4 mittels einer Prozentangabe, z. B. Größe des Originalbereiches 60 %, Größe des Stauchbereiches 40 %, vorgibt. Der Original- und der Stauchbereich 3, 4 sind dadurch unabhängig von der Lage des selektierten Bereiches 2.

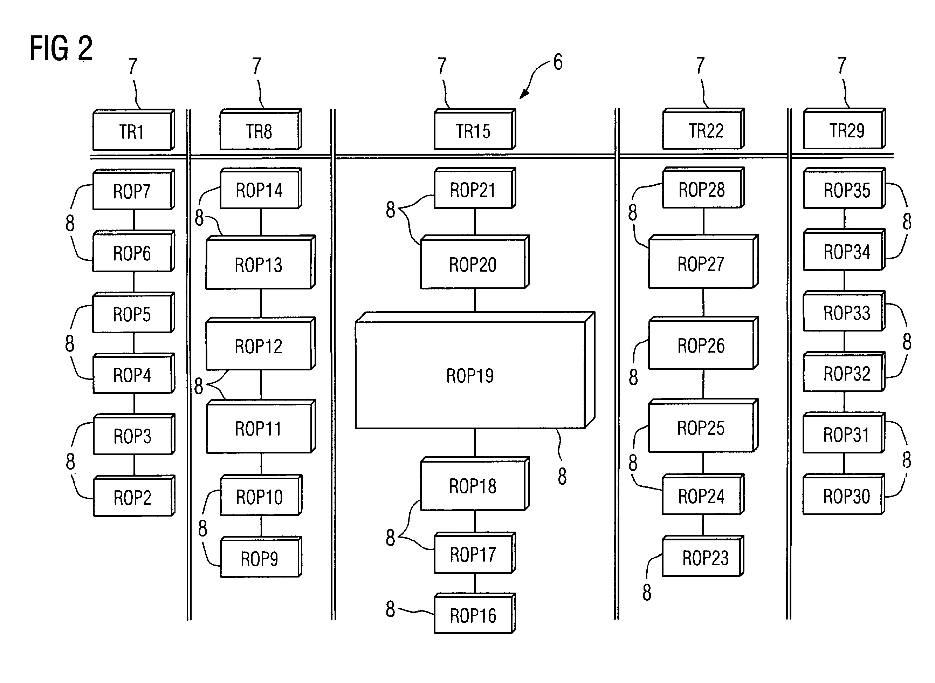

Im Folgenden wird auf Figur 2 verwiesen, in welcher ein auf einer Anzeigeeinheit dargestelltes Rezept 6 zur Steuerung eines Chargenprozesses dargestellt ist. Das Rezept 6 weist Teilrezepte 7 sowie eine Vielzahl von Rezeptoperations-Verfahrensschritten 8 auf, wobei im vorliegenden Beispiel ein Anwender den mit einer Kennung 19 versehenen Rezeptoperations-Verfahrensschritt 8 als den zu vergrößernden Bereich ausgewählt hat. Im Unterschied zu dem in Figur 1 gezeigten Beispiel wird dieser vergrößert dargestellte Bereich von einem Bereich in einer Originaldarstellung umgeben, wobei dieser wiederum von einem gestaucht dargestellten Bereich umgeben wird. Dies bedeutet im vorliegenden Beispiel, dass die mit Kennungen 11 bis 13, 18 und 20 sowie mit den Kennungen 25 bis 27 versehenen Rezeptoperations-Verfahrensschritte 8 in einer Originaldarstellung gezeigt werden, die restlichen außerhalb dieses Bereiches angezeigten Rezeptoperations-Verfahrensschritte 8 und Teilrezepte 7 dagegen werden im Vergleich zur Originaldarstellung verkleinert bzw. gestaucht dargestellt.

Zusammenfassend lässt sich die vorliegende Erfindung damit kurz wie folgt beschreiben:
Die Grafik wird derart bearbeitet, dass diese nicht in gleichmäßiger Größe und Auflösung gezeigt wird, sondern interessante Teile größer, andere dafür kleiner. Die Grafik kann auf dem Bildschirm komplett mit einem äußeren Rand sichtbar bleiben. Die Grafik ist in drei Zonen einteilbar, wobei eine Zone die Originalgröße aufweist, eine Detailzone mit dem Objekt des Interesses (das selektierte Objekt) stark vergrößert und eine Stauchzone mit einer verkleinerten Darstellung angezeigt wird. Die Größe der Stauchzone wird verändert, je nachdem, wie viel Platz die Detailzone benötigt. Immer wenn sich das Objekt des Interesses ändert, verschieben sich die Zonenränder. Je nach Lage werden diese schmaler oder breiter. Die Bereiche sind konzentrisch angeordnet, müssen allerdings nicht symmetrisch ineinander liegen, insbesondere dann nicht, wenn das selektierte Objekt am Rand liegt.

## Patentansprüche

1. Verfahren zur Bearbeitung einer auf einer Anzeigeeinheit in einer Originaldarstellung darstellbaren Grafik (1, 6), insbesondere zur Bearbeitung eines Rezeptes eines Chargenprozesses, **gekennzeichnet durch** folgende Schritte:
- Selektieren eines ersten Bereiches (2) auf der Anzeigeeinheit,
- Bearbeiten der Darstellung derart, dass auf der Anzeigeeinheit der selektierte erste Bereich (2) in einer vergrößerten Darstellung und ein zweiter Bereich (3) außerhalb des selektierten Bereiches (2) in einer zu der Originaldarstellung gestauchten Darstellung erstellt wird.

2. Verfahren nach Anspruch 1, **gekennzeichnet durch** die Bearbeitung in der Art, dass ein dritter Bereich (4) außerhalb des selektierten Bereiches (2) in der Originaldarstellung erstellt wird.

3. Verfahren nach Anspruch 2, **gekennzeichnet durch** die Bearbeitung in der Art, dass der erste Bereich (2) von dem zweiten Bereich (3) und dieser von dem dritten Bereich (4) umgeben wird.

4. Verfahren nach Anspruch 2, **gekennzeichnet durch** die Bearbeitung in der Art, dass der erste Bereich (2) von dem dritten Bereich (4) und dieser von dem zweiten Bereich (3) umgeben wird.

5. Verfahren nach einem der Ansprüche 1 bis 4, **gekennzeichnet durch** die Bearbeitung in der Art, dass die Proportionen des ersten (2) und zweiten Bereiches (3) dynamisch angepasst werden.

6. Verfahren nach einem der Ansprüche 1 bis 5, **gekennzeichnet durch** die Bearbeitung in der Art, dass der zweite Bereich (3) mit der gestauchten Darstellung verkleinert wird, indem der erste Bereich (2) vergrößert wird.

7. Verfahren nach einem der Ansprüche 1 bis 5, **gekennzeichnet durch** die Bearbeitung in der Art, dass der zweite Bereich (3) mit der gestauchten Darstellung vergrößert wird, indem der erste Bereich (2) verkleinert wird.

8. Programmiergerät mit einem Software-Werkzeug zur Bearbeitung einer auf einer Anzeigeeinheit in einer Originaldarstellung darstellbaren Grafik (1, 6), insbesondere zur Bearbeitung eines Rezeptes eines Chargenprozesses, **gekennzeichnet durch** Mittel zur Bearbeitung der Darstellung, derart, dass die Mittel eine Selektierung eines ersten Bereiches (2) ermöglichen, wobei die Mittel diesen selektierten ersten Bereich (2) auf der Anzeigeeinheit in einer vergrößerten Darstellung und einen zweiten Bereich (3) außerhalb des selektierten Bereiches (2) in einer zu der Originaldarstellung gestauchten Darstellung erstellen.

9. Programmiergerät nach Anspruch 8, **dadurch gekennzeichnet, dass** die Mittel auf der Anzeigeeinheit einen dritten Bereich (4) in der Originaldarstellung erstellen.

10. Programmiergerät nach Anspruch 9, **dadurch gekennzeichnet, dass** die Mittel die Darstellung derart bearbeiten, dass der dritte Bereich (4) den zweiten Bereich (3) und dieser den ersten Bereich (2) umgibt.

11. Programmiergerät nach Anspruch 9, **dadurch gekennzeichnet, dass** die Mittel die Darstellung derart bearbeiten, dass der zweite Bereich (3) den dritten Bereich (4) und dieser den ersten Bereich (2) umgibt.

12. Programmiergerät nach einem der Ansprüche 8 bis 11, **dadurch gekennzeichnet, dass** die Mittel die Proportionen des ersten und zweiten Bereiches (2, 3) dynamisch anpassen.

13. Programmiergerät nach einem der Ansprüche 7 bis 12, **dadurch gekennzeichnet, dass** die Mittel den zweiten Bereich (3) mit der gestauchten Darstellung verkleinern, indem die Mittel den ersten Bereich (2) vergrößern.

14. Programmiergerät nach einem der Ansprüche 7 bis 12, **dadurch gekennzeichnet, dass** die Mittel den zweiten Bereich (3) mit der gestauchten Darstellung vergrößern, indem die Mittel den ersten Bereich (2) verkleinern.
